# EUROPEAN PATENT APPLICATION

(11) **EP 4 821 906 A1**
(43) Date of publication of application: **14.10.2026**
(21) Application number: 25884004.0
(22) Date of filing: 14.05.2025
(51) Int. Cl.: C04B 35/10, H01M 50/434, H01M 50/491, H01M 50/494, H01M 50/497, H01M 50/451, H01M 10/0525, C04B 35/622, C04B 35/626, C04B 38/02

(54) **POROUS ALUMINUM OXIDE POWDER FOR LITHIUM-ION BATTERY AND PREPARATION METHOD THEREFOR, BATTERY SEPARATOR, BATTERY, AND ELECTRIC DEVICE**

(30) Priority: 30.10.2024 CN 202411525867
(71) Applicant: Suzhou Ginet New Material Technology Co. Ltd, Suzhou, Jiangsu 215500 (CN)
(72) Inventor: SHEN, Xiaoyan, Suzhou, Jiangsu 215500 (CN); YANG, Chun, Suzhou, Jiangsu 215500 (CN); LI, Hongcheng, Suzhou, Jiangsu 215500 (CN); HU, Zhihao, Suzhou, Jiangsu 215500 (CN); HU, Linzheng, Suzhou, Jiangsu 215500 (CN); LIU, Bing, Suzhou, Jiangsu 215500 (CN)
(74) Representative: Eisenführ Speiser
(86) International application number: PCT/CN2025/094910
(87) International publication number: WO 2026/091476

(57) **Abstract**

Disclosed are a porous aluminum oxide powder for lithium-ion battery and a preparation method thereof, a battery separator based on the porous aluminum oxide, a battery, and an electric device. The porous aluminum oxide powder comprises aluminum oxide particles having tetragonal prism structure in an amount of not less than 50%, aluminum oxide particles having spherical structure in an amount of not more than 1%, and aluminum oxide particles having needle-like structure and flake structure in an amount of not more than 5%. The ratio of the edge length to the diagonal length of a bottom surface of aluminum oxide particle having tetragonal prism structure is 1:(0.5-5). The porous aluminum oxide is conducive to optimizing the electrolyte wettability of a polymer separator, so that the electrolyte diffusion radius of the separator is significantly increased.

## Description

### CROSS REFERENCE TO THE RELATED APPLICATIONS

The present application claims priority to Chinese Patent Application No. 2024115258679, filed with the China National Intellectual Property Administration on October 30, 2024, and entitled "POROUS ALUMINUM OXIDE POWDER FOR LITHIUM-ION BATTERY AND PREPARATION METHOD THEREOF, BATTERY SEPARATOR, BATTERY, AND ELECTRIC DEVICE", which is incorporated herein by reference in entirety.

### TECHNICAL FIELD

The present application relates to the technical field of battery materials, and in particular to a porous aluminum oxide powder for lithium-ion battery and a preparation method thereof, a battery separator, a battery, and an electric device.

### BACKGROUND ART

A main structure of a lithium-ion battery system comprises a negative electrode, a separator, and a positive electrode, as well as an electrolyte filling between the negative electrode and the positive electrode. The charging process of the lithium-ion battery is that lithium ions are deintercalated from the positive electrode material, migrate through the separator and the electrolyte to the surface of the negative electrode material, and intercalate into the crystal structure of the negative electrode material. The discharging process is: lithium ions are deintercalated from the crystal structure of the negative electrode material, migrate through the electrolyte and the separator to the surface of the positive electrode material, and intercalate into the crystal structure of the positive electrode material.

Therefore, during the charging and discharging process of the battery, the transport rate of lithium ions within the separator directly affects the charge and discharge efficiency of the battery. The separators of existing lithium-ion battery systems are mainly polymer separators. However, because the polymer separators are made of high-molecular-weight polymers, such as polyolefin, they have poor wettability to aqueous electrolytes and poor heat resistance, thus failing to improve the electrochemical performance of the battery. To improve heat resistance of the polymer separators, those skilled in the art have proposed coating a ceramic coating on the surface of the separators. However, the ceramic coating will lead to a decrease in lithium-ion conductivity of the separator and affect the wettability of the electrolyte on the separator, thereby affecting the ionic conductivity of the separator. In addition, the main reason for poor electrolyte wettability caused by the polymer separators is the poor affinity between the polymer base film and the electrolyte. Therefore, currently, the optimization of the wettability of the polymer separator mainly focuses on the optimization of the polymer base film, while there is little attention paid to the optimization of the wettability of the ceramic coating on the separator.

### SUMMARY

An objective of the present application is to provide a porous aluminum oxide powder for lithium-ion battery, wherein the particle of the porous aluminum oxide powder is conducive to optimizing the electrolyte wettability of the polymer separator.

An objective of the present application is further to provide a preparation method of a porous aluminum oxide powder for lithium-ion battery, thereby preparing a porous aluminum oxide powder capable of optimizing the electrolyte wettability of the polymer separator.

Another objective of the present application is to provide a battery separator.

Another objective of the present application is to provide a battery.

Another objective of the present application is to provide an electrical device.

In the first aspect, the present application provides a porous aluminum oxide powder for lithium-ion battery, wherein a particle size D50 of the porous aluminum oxide powder is 0.3 µm-2 µm; a specific surface area of the porous aluminum oxide powder is 5 m²/g-50 m²/g; the porous aluminum oxide powder includes aluminum oxide particles having tetragonal prism structure in an amount of not less than 50%, aluminum oxide particles having spherical structure in an amount of not more than 1%, and aluminum oxide particles having needle-like structure and flake structure in an amount of not more than 5%; and
a ratio of an edge length to a diagonal length of a bottom surface of aluminum oxide particle having tetragonal prism structure is 1:(0.5-5).

In an optional embodiment, in some embodiments of the present application, the porous aluminum oxide powder includes aluminum oxide particles having tetragonal prism structure in an amount of not less than 90%;
and/or, aluminum oxide particles having spherical structure in an amount of not more than 0.5%; and/or, aluminum oxide particles having needle-like structure and flake structure in an amount of not more than 2%.

In an optional embodiment, in some embodiments of the present application, a content of α-aluminum oxide in the porous aluminum oxide powder is not higher than 50%.

In an optional embodiment, in some embodiments of the present application, a surface hydroxyl content of the porous aluminum oxide powder is less than 8 hydroxyl groups/nm²;
and/or, an infrared spectrum of the porous aluminum oxide powder does not exhibit any infrared peaks exceeding its baseline and having a width of less than 50 cm⁻¹ in a wavenumber range of 1,600 cm⁻¹ to 3,700 cm⁻¹.

In an optional embodiment, in some embodiments of the present application, the surface hydroxyl content of the porous aluminum oxide powder is less than 5 hydroxyl groups/ nm²;
and/or, an infrared spectrum of the porous aluminum oxide powder does not exhibit any infrared peaks exceeding its baseline and havinga width of less than 100 cm⁻¹ in a wavenumber range of 1,600 cm⁻¹ to 3,700 cm⁻¹.

In an optional embodiment, in some embodiments of the present application, the particles of the porous aluminum oxide powder each include a plurality of pores, wherein the pores have a pore diameter of 5 nm-50 nm and a pore volume of 0.01 cm³/g-0.4 cm³/g; and the specific surface area of the porous aluminum oxide powder is 5 m²/g-50 m²/g.

In an optional embodiment, in some embodiments of the present application, the pores have a pore diameter of 8 nm-20 nm and a pore volume of 0.05 cm³/g-0.2 cm³/g.
and/or, the specific surface area of the porous aluminum oxide powder is 6 m²/g-20 m²/g.

In an optional embodiment, in some embodiments of the present application, the particles of the porous aluminum oxide powder are at least one of θ phase, δ phase, and γ phase, or at least one of η phase, κ phase, χ phase, and ρ phase.

In an optional embodiment, in some embodiments of the present application, the porous aluminum oxide powder is directly prepared without being compounded from a plurality of porous aluminum oxide powders.

In the second aspect, the present application further provides a preparation method of the porous aluminum oxide powder for lithium-ion batteries in any one of the above embodiments, including: mixing aluminum hydroxide, alcohol, inorganic acid and water to obtain a precursor solution; mixing the precursor solution with an organic acid and water, and raising temperature for reaction to obtain an intermediate; and
subjecting the intermediate to calcination to obtain the porous aluminum oxide powder.

In an optional embodiment, a mass ratio of aluminum hydroxide, alcohol, inorganic acid, and water is 1:1:(0.1-0.3):(1-3);
and/or, the alcohol is at least one selected from the group consisting of ethanol, propanol, n-butanol, isobutanol, pentanol, and isopentanol;
and/or, the inorganic acid is at least one selected from the group consisting of nitric acid, sulfuric acid, and hydrochloric acid.

In an optional embodiment, a process of the raising temperature for reaction for preparing the intermediate includes: first reacting at 60 °C-80 °C for 1 h-3 h; then raising the temperature to 150 °C-200 °C and reacting for 4 h-48 h, controlling a reaction pressure at 1.4 MPa-3.7 MPa; and/or, a mass ratio of the precursor solution to the organic acid and water is 1:(0.12-0.2):(0.2-0.4), a mass ratio of the inorganic acid to the organic acid is controlled at (0.16-0.5):1; and a mass ratio of the alcohol to the organic acid is (1.2-2.0):1;
and/or, the organic acid is at least one selected from the group consisting of acetic acid, oxalic acid, and citric acid.

In an optional embodiment, the intermediate is first subjected to washing, demagnetizing, and drying, followed by calcination;
and/or, a temperature the calcination is controlled at 600 °C-1200 °C, and a duration of the calcination is 0.5 h-5 h;
and/or, air jet milling is performed after calcination to obtain a porous aluminum oxide powder. In an optional embodiment, a barrier agent with a decomposition temperature not exceeding 450 °C is added during preparing the porous aluminum oxide powder from the intermediate.

In an optional embodiment, the barrier agent is added during drying stage or calcination stage; and/or, a mass ratio of the intermediate powder after the drying to the barrier agent is 100:(0.01-0.1);
and/or, the barrier agent is at least one selected from the group consisting of ammonium bicarbonate, ammonium carbonate, and ammonium nitrate.

In the third aspect, the present application further provides a battery separator, and the battery separator includes the porous aluminum oxide in the first aspect.

In an optional embodiment, the battery separator in the present application is a battery separator, and the battery separator includes a base film and a ceramic coating formed on at least one side of the base film, wherein porous aluminum oxide is distributed in the coating; and a liquid absorption capacity of the battery separator is not less than 0.6 mL/g.

In the fourth aspect, the present application further provides a battery, including the battery separator in the third aspect.

In the fifth aspect, the present application further provides an electric device, including the battery in the fourth aspect.

The present application provides a porous aluminum oxide, an electronic component, a battery, and an electrical device. The porous aluminum oxide includes very few aluminum oxide particles having needle-like structure, flake structure and spherical structure, and is mainly composed of the aluminum oxide particles having tetragonal prism structure. A coating formed based on the aluminum oxide has fewer surface protrusion and higher flatness, and its optimization of the electrolyte wettability of the separator is significant, not only resulting in a high diffusion rate of the electrolyte on the separator, but also a larger diffusion radius, a significantly reduced dynamic contact angle, and a higher electrolyte adsorption rate. Moreover, the specific surface area of the porous aluminum oxide powder provided in the present application is lower than that of an aluminum oxide powder with a high specific surface area, but higher than that of a conventional *α*-aluminum oxide powder. It has relatively good stability and relatively weak adsorption capacity for water, thus avoiding defects such as electrolyte consumption and ion transport channel blockage caused by the difficulty in reducing the moisture content of the aluminum oxide powder or the increase in activity and decrease in stability due to water absorption during use.

The porous aluminum oxide powder disclosed herein further possesses stability and dispersibility. When applied to a separator coating, it is beneficial for improving thermal shrinkage performance and mechanical strength of the separator, and it can provide more ion transport channels for ion conduction, which is conducive to optimizing the performance of the battery separator.

### BRIEF DESCRIPTION OF DRAWINGS

FIG. 1 is an electron microscope image of the porous aluminum oxide prepared in Example 1 of the present application; and
FIG. 2 is an infrared spectrum of the porous aluminum oxide provided in Example 1 of the present application.

### DETAILED DESCRIPTION OF EMBODIMENTS

To make objectives, technical solutions, and advantages of embodiments of the present application clearer, technical solutions of the embodiments of the present application will be clearly and completely described below in conjunction with drawings. Obviously, the described embodiments are only some of the embodiments of the present application, and not all of the embodiments. Based on the embodiments in the present application, all other embodiments obtained by those ordinarily skilled in the art without making inventive efforts are within the scope of protection of the present application.

Polymer separators, mainly composed of high-molecular-weight polymers, are the main evolution and research direction of lithium-ion batteries. However, the high-molecular-weight polymers exhibit poor wettability to aqueous electrolytes, which is not conducive to ionic conduction in the separator, affecting battery performance. This is one of the main reasons why the separators affect electrical performance of a battery. In this regard, since the ceramic coating, especially an aluminum oxide coating, is typically hydrophilic, and the high-molecular-weight polymers are a primary factor affecting the wettability of the separator, current research on improving the wettability of separator mainly focuses on the polymer base film of the separator, while there are relatively few studies on impacts of the ceramic coating on the wettability of the separator, or mainly focuses on modification of inorganic particles of the ceramic coating. However, modified inorganic particles, such as hydrophilic modification of the aluminum oxide particles, can easily lead to increased moisture content, poor dispersibility, and reduced stability. Aluminum oxide is commonly used in a coating of the battery separator, a coating of an electrode material, and other battery structural components in contact with the electrolyte. One of main advantages thereof is excellent chemical stability. Therefore, the applicant aims to provide a porous aluminum oxide particle that improves and optimizes the wettability of the separator without modifying aluminum oxide.

The applicant proposes an aluminum oxide powder in the present application, wherein the aluminum oxide particles in the aluminum oxide powder are particles with porous structure, and a morphology of the particles is mainly tetragonal prism, with few or no aluminum oxide particles having other morphologies. That is, the applicant provides a porous aluminum oxide particle with a specific particle morphology within a specific particle size range (D50 of 0.3 µm-2 µm, such as 0.3 µm, 0.5 µm, 1.0 µm, 1.5 µm, and 2.0 µm). It is unexpectedly discovered that the separator coating formed based on the porous aluminum oxide with the characteristic shows particularly significant improvement in wettability of the separator with a polymer substrate as the base film, providing a prerequisite for optimizing the electrical performance of the separator.

The applicant believes that reasons might be that, based on the morphology and the particle size of the aluminum oxide particles, when forming the coating, the stacking form of the aluminum oxide particles tend to form a "short-range ordered and long-range disordered" stacking form, which features a large stacking angle of the porous aluminum oxide powder and a relatively uniform gap width between particles, and in combination with mesopores on the particles, a netlike and straight-through capillary channel and nano-scale capillary tunnels within a specific range (mesopores on the particle surface) are formed, allowing the electrolyte to rapidly infiltrate, diffuse, and be channeled, promoting the infiltration and diffusion of the electrolyte on the separator surface.

The inventors found that when aluminum oxide, as an inorganic particle, is used in the battery separators, the stacking form of the aluminum oxide particles has a relatively significant impact on a layered structure formed by stacking of aluminum oxide particles. However, since the particle size of the aluminum oxide powder is typically at a nanometer or micrometer level, it is impossible to subjectively control the stacking form of aluminum oxide. The inventors have found that by controlling the morphology of the aluminum oxide particles, the stacking form of the aluminum oxide particles can be controlled to a certain extent. The porous aluminum oxide powder proposed in the present application forms the layered structure in which the porous aluminum oxide particles tend to form a "short-range ordered and long-range disordered" stacking form. When applied to a separator coating, it features a coating with high surface flatness and few or no protrusions, especially a thin coating (a coating with a thickness of less than 3 µm). The improvement in surface flatness and surface protrusions of the coating is conducive to reducing safety and heat shrinkage performance of the separator, and is also conducive to optimizing the mechanical strength thereof. On the basis of the heat shrinkage performance, the mechanical strength and stability, the optimization of the porous structure and the stacking form of the particles is conducive to the absorption and storage of the electrolyte and the increase of ion transport channels, while improving the wettability of the separator.

The solution provided in the present application is as follows:
A particle size D50 of the porous aluminum oxide powder is 0.3 µm-2 µm; the porous aluminum oxide powder includes aluminum oxide particles having tetragonal prism structure in an amount of not less than 50%, aluminum oxide particles having spherical structure in an amount of not more than 1%, and aluminum oxide particles having needle-like structure and flake structure in an amount of not more than 5%. The ratio of an edge length to a diagonal length of a bottom surface of aluminum oxide particle having tetragonal prism structure is 1:(0.5-5), such as 1:0.5, 1:1.0, 1:2.0, 1:3.0, 1:4.0, and 1:5.0.

In the present application, the aluminum oxide particles having tetragonal prism structure refer to an apparent morphology (ignoring surface notches formed by a porous structure on surface thereof) of the particles is a prism structure enclosed by six rectangles or parallelograms (including the two end faces and four lateral faces). The two end faces of the particles are rectangles or parallelograms, and the four lateral faces are perpendicular to the two end faces. A edge length is the length of the edge on the lateral face of the aluminum oxide particle that is perpendicular to the end face; and a diagonal length of a bottom surface is the length of a longer diagonal of two diagonals in the end face.

Preferably, the ratio of the edge length to the diagonal length of the bottom surface of aluminum oxide particle having tetragonal prism structure is 1:(1-3).

In the present application, the aluminum oxide particles having spherical structure refer to aluminum oxide particles that the morphology thereof is spherical or spheroidal, such as aluminum oxide particles with a sphericity of not less than 95% or higher. The aluminum oxide particles having needle-like structure refer to aluminum oxide particles that the morphology thereof is conical, cone-like, rod-shaped, strip-shaped, or morphologies similar thereto; the aluminum oxide particles having flake structure refer to aluminum oxide particles that the morphology thereof is a flake, near-flake, or layered structure formed by stacking of a plurality of flake; and in the singlelayer structure of the flake structure or the layered structure constituting the aluminum oxide particles, the ratio of the edge length to the side length of the end face is not less than 10, or even not less than 20, thus clearly featuring a flake structure with a edge height being much lower than the side length of the end face.

When the aluminum oxide particles provided by the present application are in a stacked state, their free stacking state has a stacking angle of repose of is 38°-45°, which is significantly higher than the stacking angle of repose of a spherical or spheroidal aluminum oxide particles with the same particle size (typically < 15°). The applicant speculates that a possible reason is that a partially "short-range ordered and long-range disordered" stacking form is formed during the stacking process, which greatly increases the contact area between particles, enhances the friction, and thus increases the stacking angle of repose of the powder. It should be noted that the "short-range ordered and long-range disordered" stacking form in the present application is not strictly short-range ordered, but rather refers to a tendency for adjacent particles in the same plane to be arranged in contact in a parallel surface-to-surface contact manner, rather than a point-to-point contact manner.

When the porous aluminum oxide particles having tetragonal prism structure provided in in the present application are applied to the separator coating, they tend to form the "short-range ordered and long-range disordered" stacking form. The contact area between adjacent porous aluminum oxide particles and the contact area between the aluminum oxide particles and a substrate increase, and sliding is less likely to occur, which is conducive to improving the heat shrinkage property and the mechanical strength (puncture strength) of the separator. The resulting coating has a high surface flatness. In addition, although the porous aluminum oxide particles provided in the present application have a relatively high angle of repose, they exhibit good dispersibility, are not prone to agglomeration, and there are almost no protrusions on the resulting coating. A possible reason is that although the aluminum oxide particles provided in the present application are porous particles, their specific surface area is not high, and the content of hydroxyl groups on their surface is extremely low, exhibiting a relatively low affinity for water. Therefore, the probability of agglomeration caused by water molecules attached to the particle surfaces is relatively low, and the porous structure of their surfaces reduces the actual contact area between the adjacent particles. As a result, although they are not prone to slip,, the actual contact area between surfaces is much lower than that of non-porous particles, making agglomeration less likely to occur. Meanwhile, since the aluminum oxide particles provided in the present application are porous aluminum oxide particles, the mesopores on the aluminum oxide can provide channels for ion transport, increasing ionic conductivity, and there may be a special nano-capillary tunneling effect, playing an optimizing role on absorption and diffusion of the electrolyte. In addition, it may form two-level capillary channels with the gaps between the particles, enhancing the adsorption and diffusion of an electrolyte, which is conducive to optimizing the liquid absorption and improving the wettability. Furthermore, due to the "long-range disordered" stacking form, the resulting coating is prone to exhibit isotropy, making the optimization of longitudinal tensile strength and transverse tensile strength of the separator nearly similar under the same stretching conditions. Furthermore, due to the tetragonal prism structure and the "short-range ordered" stacking structure thereof, it is not easy to form overlap stacking for a thin coating, reducing the specific surface area loss of the aluminum oxide particles caused by overlapping, resulting in a significant decrease in air permeability value of the separator on which it is applied. Moreover, the aluminum oxide particles having tetragonal prism structure have a greater strength advantage than the aluminum oxide particles having the flake structure and the needle-like structure, and can reduce sharp protrusions in the resulting coating, minimizing damage to the substrate and coating equipment. Furthermore, the particles in the aluminum oxide powder provided in the present application are porous particles, each particle has several nanopores, which relatively increases the specific surface area, increases the ion transport channels, and reduces effects of a coating application on the decrease in the permeability value of the separator.

Preferably, the porous aluminum oxide powder includes aluminum oxide particles having tetragonal prism structure in an amount of not less than 90%, aluminum oxide particles having spherical structure in an amount of not more than 0.5%, and aluminum oxide particles having needle-like structure and flake structure in an amount of not more than 2%. Further preferably, the porous aluminum oxide powder includes the aluminum oxide particles having tetragonal prism structure in an amount of not less than 99%, or even infinitely close to 100%.

Aluminum oxide particles in the porous aluminum oxide powder provided in the present application has good morphological consistency, which is more conducive to forming a "short-range ordered and long-range disordered" stacking form. This is more conducive to reducing internal stress of the coating, improving the flatness and the mechanical strength of the coating, and is conducive to reducing the coating thickness of the separator under the same coating performance.

Preferably, the porous aluminum oxide powder provided in the present application exhibits a relatively narrow particle size distribution, wherein a value of (D90-D10)/D50 is no greater than 3, or even no greater than 2. When applied to the separator coating, the resulting separator coating has higher flatness and better uniformity; in addition, it can also shorten ion transport pathways, improve ionic conductivity and optimize battery performance. Further preferably, the aluminum oxide particles in the porous aluminum oxide powder provided in the present application are primarily of aluminum oxide single crystal, featuring a narrow particle size distribution and good morphological uniformity. When applied to the separator coating, the uniformity and flatness of the coating are better, which is conducive to further reducing the coating thickness of the separator, reducing the density of the separator, and increasing the volumetric energy density of the battery under a condition of the same coating performance.

Preferably, the D50 of the porous aluminum oxide powder provided in the present application is 0.4 µm-1 µm, and more preferably 0.5 µm-0.6 µm. More preferably, a ratio of a mode diameter to the particle size D50 of the porous aluminum oxide powder provided in the present application is 0.9-1.1; and the particle size distribution of the porous aluminum oxide powder provided in the present application follows a normal distribution or infinitely approaches a normal distribution. It should be noted that, in the present application, the D50 particle size refers to the particle size corresponding to a cumulative particle size distribution percentage of 50%; D90 refers to the particle size corresponding to the cumulative particle size distribution percentage of 90%; D10 refers to the particle size corresponding to the cumulative particle size distribution percentage of 10%; and the mode diameter refers to the particle size corresponding to the maximum frequency density of the particle size distribution.

It should be noted that, to ensure chemical stability of aluminum oxide, the specific surface area of the aluminum oxide particles used in battery separators in contact with the electrolyte should generally not be excessively high, nor should chemical activity be overly vigorous. This is because aluminum oxide particles with a very high specific surface area tend to make it difficult to remove water molecules, leading to introduction of water into the battery, thereby compromising service life, performance, and safety of a battery. Highly active aluminum oxide is prone to reacting with components within the electrolyte solution, thereby leading to problems such as electrolyte solution consumption and blockage of the ion transport channels.

The particles of the porous aluminum oxide powder provided by the present application all have several pores, with a pore diameter range of 5 nm-50 nm (e.g., 5 nm, 8 nm, 10 nm, 20 nm, 30 nm, 40 nm, and 50 nm), preferably, 8 nm-20 nm. The specific surface area falls within a range of 5 m²/g-50 m²/g (e.g., 5 m²/g, 6 m²/g, 10 m²/g, 15 m²/g, 20 m²/g, 30 m²/g, 40 m²/g, and 50 m²/g), more preferably, 6 m²/g-40 m²/g, and more preferably, 6 m²/g-20 m²/g.

In the porous aluminum oxide powder provided by the present application, the aluminum oxide particles primarily have the tetragonal prismatic structure; and in fact, the aluminum oxide particles are mainly aluminum oxide single crystals. Pores are formed both on surfaces and interior of the aluminum oxide single crystal particles, featuring excellent crystal stability and a relatively low specific surface area. Compared with aluminum oxide particles with an ultra-high specific surface area (e.g., exceeding 150 m²/g), the porous aluminum oxide powder is easier to form aluminum oxide powder with a lower moisture content during the preparation process. During storage, moisture content stability of the aluminum oxide powder remains better, thereby minimizing occurrence of defects such as agglomeration and adhesion. By contrast, the aluminum oxide powders with an ultra-high specific surface area, particularly those at a nanometer or micrometer level, often suffer from drawbacks such as difficulty in water removal and rapid caking due to good hydrophilicity and high specific surface area. However, the specific surface area of the porous aluminum oxide powder provided by the present application is not low; it can enhance the specific surface area of aluminum oxide, increase space for absorbing and storing the electrolyte solution, thereby increasing the absorption capacity of the electrolyte solution and increasing the number of the ion transport channels. Furthermore, because the specific surface area is not high, it can achieve a balance between water absorption capability and dispersibility in a slurry, while retaining increased absorption capacity of the electrolyte solution and increased the number of the ion transport channels.

The porous aluminum oxide powder provided in the present application has a pore volume of 0.01 cm³/g-0.4 cm³/g (e.g., 0.01 cm³/g, 0.05 cm³/g, 0.10 cm³/g, 0.20 cm³/g, 0.30 cm³/g, and 0.40 cm³/g), preferably 0.05 cm³/g-2 cm³/g.

It should also be noted herein that long-term contact between the aluminum oxide powder and water molecules triggers a slow hydration reaction, resulting in formation of highly viscous and highly reactive hydrated aluminum oxide; therefore, maintaining a low and stable moisture content within the aluminum oxide powder is critical for its application in batteries.

The porous aluminum oxide powder provided in the present application has a low moisture content; tests indicate that a surface hydroxyl content of the porous aluminum oxide powder is less than 8 hydroxyl groups/nm²; and an infrared spectrum of the porous aluminum oxide powder does not exhibit any infrared peaks exceeding its baseline and having a width of less than 50 cm⁻¹ in a wavenumber range of 1,600 cm⁻¹-3,700 cm⁻¹, indicating that the moisture content is so low as to be virtually undetectable. In addition, the inventors also placed the resulting porous aluminum oxide powder in an air environment for 48 h before detecting the moisture content thereof, and it shown that the moisture content of the porous aluminum oxide powder remained stable at below 0.3%, indicating that the porous aluminum oxide powder exhibits a relatively high stability and does not rapidly absorb moisture from the air, thereby preventing issues such as caking or agglomeration. A probable reason is that the porous aluminum oxide particles within the porous aluminum oxide powder provided by the present application are primarily aluminum oxide single crystals. When forming the aluminum oxide crystals and a porous structure, aluminum atoms within the crystals are not extensively exposed, making it difficult to bond with hydroxyl groups from water molecules, thus not showing obvious water absorption performance, and thereby improving stability thereof in an environment containing water vapor. The applicants found that although there are still extremely trace amounts of hydroxyl groups on the surface of the porous aluminum oxide powder after testing, no vibration peak of hydroxyl groups appear in the infrared spectrum. Furthermore, the porous aluminum oxide unexpectedly exhibits extremely excellent performance in terms of stability in the presence of water or water vapor and dispersibility in slurries. Its viscosity and stability in water or aqueous solutions are unexpectedly optimized, which is conducive to applications of the porous aluminum oxide powder in battery components that come into contact with the electrolytes, such as the separator.

Preferably, a surface hydroxyl content of the porous aluminum oxide powder is less than 5 hydroxyl groups/nm²; and the infrared spectrum of the porous aluminum oxide powder does not exhibit any infrared peaks exceeding its baseline thereof and having a width of less than 100 cm⁻¹ in a wavenumber range of 1,600 cm⁻¹-3,700 cm⁻¹. Further preferably, the surface hydroxyl content of the porous aluminum oxide powder is 3-5 hydroxyl groups/nm², such as 3 hydroxyl groups/nm², 4 hydroxyl groups/nm², and 5 hydroxyl groups/nm².

In the porous aluminum oxide powder provided in the present application, the particles in the porous aluminum oxide powder are at least one of θ phase, δ phase, and γ phase, or at least one of η phase, κ phase, χ phase, and ρ phase.

It should be noted that when the porous aluminum oxide powder includes the γ -phase aluminum oxide, in addition to the γ -phase aluminum oxide, it further includes at least one of δ phase, η phase, κ phase, χ phase, and ρ phase aluminum oxide. When the porous aluminum oxide powder includes the α phase aluminum oxide, the content of the α-aluminum oxide in the porous aluminum oxide powder is not higher than 50%, more preferably, not higher than 20%.

Further preferably, in order to enhance chemical stability of the porous aluminum oxide and reduce activity, the content of γ-aluminum oxide in the porous aluminum oxide provided in the present application is relatively low, such as less than 10% or less than 8%.

A total content of metal elements, such as iron, cobalt, chromium, zinc, and nickel in the porous aluminum oxide provided in the present application can achieve a level below 500 ppm. A possible reason is that the porous aluminum oxide particles provided by the present application are mainly single crystal particles, featuring a relatively high integrity of the crystal particles. Moreover, during the preparation process, the porous structure is not formed through granulation; but rather through water molecules escaping from the crystal particles and atomic displacements during a phase transition process, making it difficult for the metal elements to embed in the porous aluminum oxide particles and to adhere to surfaces of the single crystal particles, making it easier for other metal ions in an ionic state to remain in the reaction system and to be removed via washing, demagnetizing, or other impurity removal methods.

It should be noted that the porous aluminum oxide powder provided in the present application is directly prepared from raw materials and is not compounded from a plurality of porous aluminum oxide powders. That is, in the porous aluminum oxide powder provided by the present application, the porous aluminum oxide particles are mainly tetragonal prismatic particles, while aluminum oxide particles having spherical/spheroidal, needle-like, flake, or other morphologies are absent or present in negligible amounts. Furthermore, the porous aluminum oxide particles exhibit a narrow particle size distribution. The powder is not achieved through sieving, classification, or compounding, but rather, the morphology of the product after direct preparation is just like this. In this regard, in order for those skilled in the art to better understand and implement the present application, following further provides a preparation method that can be used to prepare the above porous aluminum oxide powder.

Step (1): aluminum hydroxide, alcohol, inorganic acid, and pure water are provided, mixed and stirred at 60 °C-80 °C (e.g., 60 °C, 70 °C, or 80 °C) for 30-60 min (e.g., 30 min, 40 min, 50 min, or 60 min) to obtain a precursor solution; and a stirring speed is controlled at 30 Hz-50 Hz (e.g., 30 Hz, 40 Hz, or 50 Hz);

Step (2): the precursor solution is mixed with an organic acid and pure water, heated to 60 °C-80 °C (e.g., 60 °C, 70 °C, or 80 °C), and stirred for 1 h-3 h (e.g., 1 h, 2 h, or 3 h); then the temperature is raised to 150 °C-200 °C (e.g., 150 °C, 160 °C, 170 °C, 180 °C, 190 °C, or 200 °C), and the reaction is maintained at the temperature for 4 h-48 h (e.g., 4 h, 10 h, 20 h, 30 h, 40 h, or 48 h) to obtain an intermediate. A reaction pressure is controlled at 1.4 MPa-3.7 MPa (e.g., 1.4 MPa, 2.0 MPa, 3.0 MPa, or 3.7 MPa).

Step (3): After washing, demagnetizing and drying, the intermediate is calcined at 600 °C-1,200 °C (e.g., 600 °C, 800 °C, 1,000 °C, or 1,200 °C) for 0.5 h-5 h (e.g., 0.5 h, 1.0 h, 3.0 h, or 5.0 h), followed by air jet milling to obtain the porous aluminum oxide powder.

In step (3), a small amount of barrier agent that can decompose into gas at a low temperature is added. A decomposition temperature of the barrier agent is not higher than 450 °C, more preferably not lower than 50 °C and not higher than 100 °C. For example, the barrier agent can be ammonium bicarbonate, ammonium carbonate, or ammonium nitrate, preferably ammonium carbonate; the amount of the barrier agent, by mass percentage, is 0.01%-0.1% of the dried intermediate powder obtained in step (3). Timing of adding the barrier agent can be during the drying stage or the calcination stage. When added during the calcination stage, it can also reduce particle adhesion to a container wall used for calcination during the calcination process.

In addition, the inventors further found that the consistency of the morphology of the porous aluminum oxide powder is significantly related to the morphology and purity of the intermediate before calcination, the content of crystal water in the intermediate, and temperature control during the calcination process. The intermediate before calcination also needs to be controlled to have a predominantly tetragonal prism structure, with virtually no or no spherical or spheroidal particles. Preferably, the intermediate before calcination is single crystal particles with a narrow particle size distribution and good morphological consistency. The inventors also unexpectedly found that the content of crystal water in the intermediate, by mass percentage, is no more than 35%, preferably the content of crystal water not less than 5%, and preferably the content of crystal water not less than 16%. For the intermediates within the range, the pore volume, the pore size, and the hydroxyl content of the resulting porous aluminum oxide particles can be controlled within a desired range. Furthermore, in the infrared spectrum, the porous aluminum oxide particles do not exhibit any infrared peaks exceeding its baseline and having a width less than 50 cm⁻¹ in a wavenumber range of 1,600 cm⁻¹-3,700 cm⁻¹. A possible reason is that by controlling the content of crystal water, the morphology of the intermediate, and the calcination process during the preparation process, oxygen atoms can be more easily exposed while aluminum atoms are less exposed, when the aluminum atoms and oxygen atoms in the resulting porous alumina crystals move during the crystal phase change process. This ensures that the resulting aluminum oxide particles remain relatively stable even in an environment containing water molecules. It should be noted that the "not exhibit any infrared peaks exceeding its baseline and having a width less than 50 cm⁻¹ in a wavenumber range of 1,600 cm⁻¹-3,700 cm⁻¹" mentioned herein refer to no appearance of obvious peaks with a transmittance of less than 98%.

In step (2), the entire reaction system obtained in step (1) is added to the reaction system in step (2). An alcohol and an inorganic acid (strong acid) are introduced into the reaction system in step (2), forming a pH buffer with the organic acid (weak acid) added in step (2), maintaining a significantly acidic environment in the reaction system during the reaction process, while the content of hydrogen ions does not change significantly with the occurrence of the reaction, promoting the formation of the intermediate and ensuring good consistency of the intermediates. In addition, the addition of the alcohol introduces a certain amount of alkyl groups into the system. The presence of alcohol may replace hydroxyl groups, thus affecting the deprotonation process, which can slow down the reaction rate and the degree of reaction completion, promote the dissolution of the resulting aluminum hydroxide, further promote the transport and transfer of metal oxygen ions, and regulate the nucleation and growth of the intermediate. The crystal particle size and grain consistency of the intermediate formed by the above methods are better. A reason may be that, after the reaction rate decreases, the dissolved aluminum hydroxide is more inclined to undergo heterogeneous nucleation, while crystal growth occurs on the incompletely dissolved aluminum hydroxide. In addition, aluminum nitrate in the precursor solution, on the one hand, provides more metal aluminum ions, increasing the supersaturation of the system and enhancing the nucleation driving force. Furthermore, the intermediate obtained by the above preparation method has a relatively high content of crystal water. A possible reason is that a complex formed by aluminum ions and citrate ions during the reaction inhibits the crystallization process, resulting in incomplete crystallization. In addition, the entire reaction mainly involves dissolution, transport, and dehydration crystallization of aluminum hydroxide. During the crystallization process, an anhydrous aluminum complex may compete with aluminum hydroxide for hydroxyl groups and occupy special lattice sites, thereby inducing a large number of lattice distortions, oxygen vacancies, and aluminum interstitials, leading to incomplete crystallization, reduced dehydration effect, and increased content of crystal water, thus forming an intermediate with a high content of crystal water. Due to these lattice defects and release of crystalline water during subsequent calcination, the crystal structure collapses, thus forming a porous structure. In addition, anions in a further reaction system are adsorbed by cations during the crystallization process, thereby promoting or inhibiting the grain growth along specific directions or crystal faces, leading to anisotropic growth of crystals, which may be the reason why the aluminum oxide particles exhibit specific morphologies.

In the preparation method, the mass ratio of aluminum hydroxide, alcohol, inorganic acid, and pure water is 1:1:(0.1-0.3):(1-3), such as 1:1:0.1:1, 1:1:0.2:2, and 1:1:0.3:3; in step (2), the mass ratio of the precursor solution to the organic acid and pure water is 1:(0.12-0.2):(0.2-0.4), such as 1:0.12:0.2, 1:0.15:0.3, and 1:0.20:0.4; wherein the mass ratio of the inorganic acid to the organic acid is controlled to be (0.16-0.5):1, such as 0.16:1, 0.20:1, 0.30:1, 0.40:1, and 0.50:1; and the mass ratio of the alcohol to the organic acid is (1.2-2.0):1, such as 1.2:1, 1.5:1, 1.8:1, and 2.0:1. The alcohol can be one or more common alcohol solvents, such as ethanol, propanol, n-butanol, isobutanol, pentanol, and isopentanol; the inorganic acid can be one or more strong inorganic acids, such as nitric acid, sulfuric acid, and hydrochloric acid; and the organic acid can be one or more weak organic acids, such as acetic acid, oxalic acid, and citric acid.

Preferably, in step (3), a temperature profile of the calcination process is as follows: rapidly heating to at least 250 °C at a heating rate of not less than 5 °C/s, reducing the heating rate (to not higher than 1 °C/s) and then continuing to heat up the holding temperature, followed by holding and sintering for 0.5 h-5 h to obtain the product, so as to promote maintenance of the single crystal morphology of the porous aluminum oxide particles and control of pore size and pore volume. Preferably, a method of the drying is an infrared microwave drying. When using the infrared microwave drying, the dried intermediate powder does not need to be dispersed or crushed and can be directly fed into the calcination process, so that costs can be saved and morphological integrity of the product can be improved. Furthermore, in order to achieve good dispersion effect, when using the infrared microwave drying, the demagnetized slurry is first pressure-filtered to form a filter cake with a free water content of not less than 60%, which is then broken into small pieces. Subsequently, the small filter cake pieces are heated by infrared irradiation to a temperature not lower than 150°C and maintained for 8-15 minutes, followed by cooling to 80-100°C. Thereafter, microwave heating is applied for 3-10 minutes, and then the temperature is further raised by microwave heating to above 150°C until the small filter cake pieces automatically burst into powder..

The intermediate powder formed by segmented drying using an infrared microwave drying process has a low moisture content. The moisture content can reach no more than 0.2% (free water). Moreover, appearance and morphology of the particles are not damaged by grinding or ball milling during the process, resulting in better integrity. Furthermore, since it does not involve a high-temperature spraying process or the step of automatic bursting into powder, the resulting powder exhibits reduced agglomeration of crystalline particles and superior single-crystal dispersion of the product.

After obtaining the intermediate and before demagnetizing, pH of the intermediate slurry is adjusted to 7-8.5, preferably 7.5-8.0, using an organic acid. Then, demagnetizing is performed, followed by drying using a drying method. The drying method can be spray drying or the infrared-microwave drying. When the spray drying is used, a dispersing process is included after the spray drying and before the calcination, in which the dried particles are dispersed into a size of 0.2 µm-5 µm using an air jet milling or other grinding means.

Preferably, the drying method is the infrared-microwave drying. Similarly, when using the infrared-microwave drying, the dried intermediate powder does not need to be dispersed or crushed and can be directly fed into the calcination process, so that costs can be saved and morphological integrity of the product can be improved. In addition, in order to achieve good dispersion effect, when using the infrared-microwave drying, the demagnetized slurry is first pressure-filtered to form a filter cake with a water content of not less than 60%, which is then broken into small pieces. Subsequently, the small filter cake pieces are heated by infrared irradiation to a temperature not lower than 150°C and maintained for 8-15 minutes, followed by cooling to 80-100°C. Thereafter, microwave heating is applied for 3-10 minutes, and then the temperature is further raised by microwave heating to above 150°C until the small filter cake pieces automatically burst into powder. Similarly, the intermediate powder formed by the segmented drying process using an infrared microwave drying process has a low moisture content. The moisture content can reach no more than 0.2% (free water). Moreover, appearance and morphology of the particles are not damaged by grinding or ball milling during the process, resulting in better integrity. Furthermore, since it does not involve a high-temperature spraying process or the step of automatic bursting into powder, the resulting powder exhibits reduced agglomeration of crystalline particles and superior single-crystal dispersion of the product.

The resulting intermediate also features the content of crystal water no more than 35% by mass percentage, preferably, the content of crystal water no less than 5%, and preferably, the content of crystal water no less than 16%, and morphology is mainly tetragonal prism, with a particle size mainly distributed in a range of 0.2 µm-5 µm.

Similarly, in step (2), a small amount of the barrier agent that can decompose into gas at a relatively low temperature is added. The decomposition temperature of the barrier agent is not higher than 450 °C, and more preferably not lower than 50 °C and not higher than 100 °C. For example, the barrier agent can be ammonium bicarbonate, ammonium carbonate, or ammonium nitrate, preferably ammonium carbonate; the amount of the barrier agent, by mass percentage, is 0.01%-0.1%, such as 0.01%, 0.03%, 0.05%, 0.08%, and 0.10%, of the dried intermediate powder obtained in step (2). Timing of adding the barrier agent can be during the drying stage or the calcination stage. When added during the calcination stage, it can also reduce particle adhesion to the container wall used for calcination during the calcination process. A temperature profile of the calcination process is as follows: rapidly heating to at least 250 °C at a heating rate of not less than 5 °C/min, reducing the heating rate (to not higher than 1 °C/s) and then heating to the holding temperature, followed by holding and sintering for 0.5 h-5 h to obtain the product, to promote the maintenance of the single crystal morphology of the porous aluminum oxide particles and the control of pore size and pore volume.

In the present preparation method, the inventors found that adjusting the acidity of the slurry directly after the reaction can promote the uniformity of crystal structure and the particle size of a product as well as the pore size distribution. A possible reason is that adjusting the acidity directly after the reaction can dissolve aluminum hydroxide, resulting in an intermediate with a higher purity and the presence of a large number of defects on the intermediate, providing biased guidance for formation and development of subsequent pores.

In the second aspect, the present application further provides a battery separator, and the battery separator includes the porous aluminum oxide in the first aspect.

The battery separator can be a battery separator, which includes a substrate and a coating formed on at least one side of the substrate, wherein the porous aluminum oxide is distributed in the coating; and the liquid absorption capacity of the battery separator is not less than 0.6 mL/g.

In the third aspect, the present application further provides a battery, including the battery separator in the second aspect.

In the fourth aspect, the present application further provides an electric device, including the battery in the third aspect. The electrical device can be any one of the electrical devices that can use a lithium-ion solid-state battery, such as an electric vehicle, an aircraft, a spacecraft, a mobile phone, a tablet computer, a handheld game console, a portable digital device (e.g., a digital camera), a smart home device (a home appliance), or a smart wearable device (e.g., a smart bracelet, a smartwatch, smart glasses).

To facilitate understanding of inventive points of the present application by those skilled in the art, some preferred examples are provided below in conjunction with drawings to illustrate the above technical solutions.

### Example 1

The present example provided a preparation method for a porous aluminum oxide powder, including following steps:
Aluminum hydroxide, n-butanol, nitric acid, and pure water were added to a reaction vessel in a mass ratio of 1:1:0.2:2. Temperature was controlled at 70 °C, and stirring speed was controlled at 45 Hz. The reaction was performed for 30 min. Aluminum nitrate, citric acid, and pure water were added to the reaction vessel in a mass ratio of 0.2:0.6:1 based on the mass of aluminum hydroxide, with a filling volume of 60%. Vessel temperature was controlled at 70 °C, and stirring speed was controlled at 45 Hz. The reaction was performed for 2 h. The temperature was raised to 150 °C at a heating rate of 5 °C/min, held at the temperature for 8 h and pressure was 2.12 MPa to obtain a slurry;
the slurry was washed with pure water and filtered to obtain an intermediate. The intermediate was then dispersed in pure water to form a slurry, which was demagnetized, and spray-dried at 200 °C-220 °C to obtain spray-dried particles. The spray-dried particles were subjected to air jet milling to obtain intermediate particles with a particle size mainly distributed in a range of 0.2 µm-5 µm; and by mass percentage, 0.01% ammonium carbonate was added to the intermediate particles and mixed uniformly, and then heated to 1,100 °C at a rate of 5 °C/min and held at the temperature for 2 h to obtain porous aluminum oxide powder.

### Example 2

The present example also provided a preparation method for a porous aluminum oxide powder. Compared with Example 1, in the present example, a mass ratio of aluminum nitrate, citric acid, and pure water was 0.15:0.45:1 based on the mass of aluminum hydroxide; pressure in the reaction vessel was controlled at 2.21 MPa. The remaining preparation steps were the same as in Example 1, obtaining a porous aluminum oxide powder.

### Example 3

The present example also provided a preparation method for a porous aluminum oxide powder. Compared with Example 1, in the present example, a mass ratio of aluminum nitrate, citric acid, and pure water was 0.12:0.36:1 based on the mass of aluminum hydroxide; pressure in the reaction vessel was controlled at 2.25 MPa; and the remaining preparation steps were the same as in Example 1, obtaining a porous aluminum oxide powder.

### Example 4

The present example also provided a preparation method for a porous aluminum oxide powder. Compared with Example 1, in the present example, a mass ratio of aluminum nitrate, citric acid, and pure water was 0.1:0.3:1 based on the mass of aluminum hydroxide; pressure in the reaction vessel was controlled at 2.35 MPa. The remaining preparation steps were the same as in Example 1, obtaining a porous aluminum oxide powder.

### Example 5

The present example also provided a preparation method for a porous aluminum oxide powder. Compared with Example 1, in the present example, a mass ratio of aluminum nitrate, citric acid, and pure water was 0.05:0.15:1 based on the mass of aluminum hydroxide; pressure in the reaction vessel was controlled at 2.42 MPa. The remaining preparation steps were the same as in Example 1, obtaining a porous aluminum oxide powder.

### Example 6

The present example also provided a preparation method for a porous aluminum oxide powder. Compared with Example 1, the temperature was raised to 180 °C and held at the temperature for 8 h and pressure in the reaction vessel was controlled at 3.50 MPa to obtain a slurry. The remaining preparation steps were the same as in Example 1, obtaining a porous aluminum oxide powder.

### Example 7

The present example also provided a preparation method for porous aluminum oxide powder. Compared with Example 1, a mass ratio of aluminum hydroxide, n-butanol, nitric acid, and pure water were mixed in a mass ratio of 1:0.2:0.2:2.8, and pressure in the reaction vessel was controlled at 1.50 MPa. The remaining preparation steps were the same as in Example 1, obtaining a porous aluminum oxide powder.

### Example 8

The present example also provides a preparation method for a porous aluminum oxide powder. Compared with Example 1, after demagnetizing, the slurry was pressure filtered to form a filter cake, and the solid content of the filter cake was not less than 65%. The filter cake was broken into small filter cake pieces with a diameter of no more than 3 cm. The temperature of the small filter cake pieces was raised to 80 °C by infrared light. The infrared light was on throughout the drying process, with an infrared temperature of about 150 °C. After drying for 10 min, the temperature of the small filter cake pieces was raised to 100 °C by infrared light, so that moisture inside the filter cake was gradually evaporated. After drying for 7 min, the temperature of the small filter cake pieces was raised to 150 °C by infrared light, enabling moisture inside and outside the material to evaporate to ≤ 0.2%, and the small filter cake pieces automatically burst into a powder state, thereby obtaining intermediate particles with a particle size mainly distributed in a range of 0.2 µm-5 µm. The remaining preparation steps were the same as in Example 1, obtaining a porous aluminum oxide powder.

### Comparative Example 1

Compared with Example 1, in the present comparative example, aluminum hydroxide, n-butanol, nitric acid, and pure water were added to a reaction vessel in a mass ratio of 1:1:0.1:2. Temperature was controlled at 70 °C, and stirring speed was controlled at 45 Hz. The reaction was performed for 30 min. Aluminum nitrate, citric acid, and pure water were added to the reaction vessel in a mass ratio of 0.05:0.6:1 based on the mass of aluminum hydroxide, with a filling volume of 60%. Vessel temperature was controlled at 70 °C, and stirring speed was controlled at 45 Hz. The reaction was performed for 2 h. The temperature was raised to 150 °C at a heating rate of 5 °C/min, held at the temperature for 8 h and pressure was 2.33 MPa to obtain a slurry. The remaining preparation steps were the same as in Example 1, obtaining a porous aluminum oxide powder.

### Comparative Example 2

Compared with Example 1, in the present comparative example, aluminum hydroxide, n-butanol, nitric acid, and pure water were added to a reaction vessel in a mass ratio of 1:1:0.05:2. Temperature was controlled at 70 °C, and stirring speed was controlled at 45 Hz. The reaction was performed for 30 min. Aluminum nitrate, citric acid, and pure water were added to the reaction vessel in a mass ratio of 0.05:0.6:1 based on the mass of aluminum hydroxide, with a filling volume of 60%. Vessel temperature was controlled at 70 °C, and stirring speed was controlled at 45 Hz. The reaction was performed for 2 h. The temperature was raised to 150 °C at a heating rate of 5 °C/min, held at the temperature for 8 h and pressure was 2.23 MPa to obtain a slurry. The remaining preparation steps were the same as in Example 1, obtaining a porous aluminum oxide powder.

### Comparative Example 3

Compared with Example 1, in the present comparative example, aluminum hydroxide, n-butanol, nitric acid, and pure water were added to a reaction vessel in a mass ratio of 1:1:0.2:3. Temperature was controlled at 70 °C, and stirring speed was controlled at 45 Hz. The reaction was performed for 30 min, with a filling volume of 60%. Vessel temperature was controlled at 70 °C, and stirring speed was controlled at 45 Hz. The reaction was performed for 2 h. The temperature was raised to 150 °C at a heating rate of 5 °C/min, held at the temperature for 8 h and pressure was 2.10 MPa to obtain a slurry. The remaining preparation steps were the same as in Example 1, obtaining a porous aluminum oxide powder.

### Comparative Example 4

Compared with Example 1, no ammonium carbonate was added during the calcination process. The remaining steps are the same as those in Example 1, obtaining a comparative sample.

### Comparative Example 5

Compared with Example 1, in the present comparative example, aluminum hydroxide, n-butanol, nitric acid, and pure water were added to a reaction vessel in a mass ratio of 1:1:0.2:2. Temperature was controlled at 70 °C, and stirring speed was controlled at 45 Hz. The reaction was performed for 30 min. Aluminum nitrate, nitric acid, and pure water were added to the reaction vessel in a mass ratio of 0.1:0.6:1 based on the mass of aluminum hydroxide, with a filling volume of 60%. Vessel temperature was controlled at 70 °C, and stirring speed was controlled at 45 Hz. The reaction was performed for 2 h. The temperature was raised to 150 °C at a heating rate of 5 °C/min, held at the temperature for 8 h and pressure was 2.12 MPa to obtain a slurry. The remaining preparation steps were the same as in Example 1, obtaining a porous aluminum oxide powder.

### Test

1. Test of particle size
   The test was performed using a laser particle size analyzer (Mastersizer 3000).
2. Pore volume and specific surface area
   The test was performed using a physical adsorption analyzer (Micromeritics 3030).
3. Infrared spectrum
   The test was performed using a fourier transform infrared spectrometer (Nicolet^{™} is50).
4. Surface hydroxyl content
   The test was performed using NaOH titration method.
5. Impurity content
   The test was performed using an inductively coupled plasma (ICP) analyzer (Thermo Scientific).
6. Angle of repose
   The test was performed using an angle of repose tester (Aode-307).
7. Particle proportion:
   Scanning electron microscope (SEM) images of the products were captured using an electron scanning electron microscope. The number N1 of particles and the number N2 of particles having tetragonal prism structure in the SEM images were counted. A proportion of the particles having tetragonal prism structure was calculated by a formula: N2/N1×100%.
8. Electrolyte diffusion radius
   On a concentric circular plane, separators (circular disc with a radius of 60 mm) coated with different aluminum oxide were placed. Under a condition of a temperature of 25 °C, a humidity of 60% RH, and an atmospheric pressure of 298.15 K, 1 mL of electrolyte (DEC: EMC: DMC=1:1:1, lithium hexafluorophosphate (LIPF₆), 1 mol/L) was rapidly added at the center of the circle. A diffusion radius of the electrolyte after 1 min was observed and measured.
9. Air permeability value: an air permeability tester (Gurley 4110N, USA) was used.
10. Contact angle and dynamic contact angle: a contact angle at 10 s was measured using a contact angle meter (SINDIN).

The porous aluminum oxide powders obtained in the above Examples 1-8 and comparative samples obtained in Comparative Examples 1-5 were respectively subjected to particle size, pore volume, pore size, hydroxyl content, impurity content, and infrared spectrum tests. Test results are shown in Table 1.

**Table 1**

| | D50 | Pore Volume (cm³/g) | Pore Size (nm) | Hydroxy Content (groups/n m²) | Angle of Repose (°) | Proportion of Particles Having Tetragonal Prism Structure (%) |
|---|---|---|---|---|---|---|
| Example 1 | 0.3 | 0.35 | 50 | 3 | 45 | 99 |
| Example 2 | 0.3 | 0.27 | 30 | 5 | 43 | 95 |
| Example 3 | 0.3 | 0.15 | 20 | 4 | 44 | 96 |
| Example 4 | 0.3 | 0.12 | 10 | 3 | 42 | 97 |
| Example 5 | 0.3 | 0.10 | 5 | 3 | 40 | 94 |
| Example 6 | 0.7 | 0.24 | 40 | 3 | 39 | 93 |
| Example 7 | 1 | 0.08 | 4 | 4 | 38 | 92 |
| Example 8 | 0.3 | 0.35 | 50 | 5 | 41 | 93 |
| Comparative Example 1 | 1 | 0.33 | 50 | 31 | 15 | 50 |
| Comparative Example | 2 | 0.36 | 50 | 42 | 16 | 52 |
| Comparative Example | 0.3 | No | No | 25 | 10 | 20 |
| Comparative Example 4 | 0.8 | 0.33 | 47 | 28 | 25 | 60 |
| Comparative Example 5 | 1 | 0.27 | 41 | 23 | 18 | 55 |

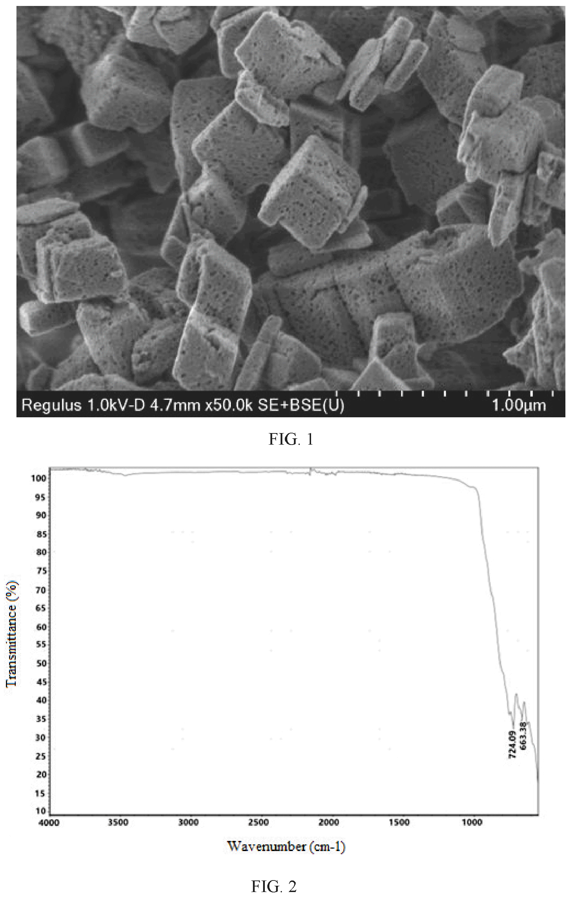

As shown in Table 1, the porous aluminum oxide particles provided in the present application have a lower hydroxyl content. Moreover, the applicant performed infrared spectrum detection on the porous aluminum oxide particles prepared in the present application, and the results are shown in FIG 2. As can be seen from the figure that the porous aluminum oxide particles provided in the present application do not exhibit any infrared peaks exceeding the baseline of the infrared spectrum and having a width less than 100 cm⁻¹ in the wavenumber range of 1,600 cm⁻¹ to 3,700 cm⁻¹, indicating that the porous aluminum oxide particles provided in the present application have a low affinity for water molecules, which is conducive to optimizing the reliability of batteries in which they are applied. In addition, the angle of repose of the porous aluminum oxide particles provided the present application is controlled within a range of 38°-45°. The inventors found that during a coating process, when the angle of repose of the porous aluminum oxide particles provided in the present application is controlled within this range, the uniformity of the resulting coating is good, and the heat shrinkage and strength thereof (the puncture strength and tensile strength) are also improved, with an improvement being approximately 8% to 15% higher than that of the coating of spherical aluminum oxide.

The applicant further investigated the porous aluminum oxide provided in the present application as ceramic particles for a separator coating. The resulting coating features excellent thickness uniformity, low surface protrusion rate, and high liquid absorption capacity.

Raw materials: porous aluminum oxide provided in Examples 1-8; porous aluminum oxide provided in Comparative Examples 1-5;
conventional aluminum oxide powder, D50=0.4 µm, D50=0.8 µm, Suzhou Ginet New Material Technology Co., Ltd.
PE separator, 9 µm, Suzhou Green Power New Energy Material Co., Ltd.
Dispersant SF8, Sanopco, Japan.
Binder BM900-B, Zeon, Japan.
Polyoxyethylene Lauryl Ether, Nantong Haian Chemical (Jiangsu Haian Petrochemical Plant).

### Preparation of separator sample:

100 g of aluminum oxide powder and 180 g of deionized water were mixed and stirred for 10 min. 3 g of dispersant SF8 were added and stirred for 10 min. 1.75 g of emulsifier, polyoxyethylene lauryl ether, were added and stirred for 10 min. Finally, 5 g of acrylic emulsion BM900-B were added, and stirring was continued for 30 min to obtain a ceramic slurry. The ceramic slurry was coated onto a surface of the PE separator on an online rod coating machine, followed by drying in a forced-air oven at 40 °C for 10 min to obtain a coated separator. The performance of the coated separator was then tested, and test results are as follows.

**Table 2**

| | Electrolyte Diffusion Radius (mm) | Air Permeability Value (s/100cc) | 10s Static Contact Angle (°) |
|---|---|---|---|
| Example 1 | 30 | 141 | 18 |
| Example 2 | 29 | 145 | 19 |
| Example 3 | 28 | 149 | 20 |
| Example 4 | 27 | 152 | 19 |
| Example 5 | 25 | 154 | 20 |
| Example 6 | 25 | 157 | 21 |
| Example 7 | 22 | 159 | 22 |
| Example 8 | 24 | 160 | 23 |
| Comparative Example 1 | 15 | 195 | 25 |
| Comparative Example 2 | 14 | 200 | 24 |
| Comparative Example 3 | 13 | 201 | 35 |
| Comparative Example 4 | 15 | 199 | 27 |
| Comparative Example 5 | 14 | 194 | 26 |

As can be seen from Table 2, the electrolyte diffusion radius of the separator coating formed by the porous aluminum oxide provided in the present application is significantly improved. Under a condition of the same substrate, the electrolyte diffusion radius increases from existing 13 mm-15 mm to over 22 mm. It can be seen that the specific morphology, particle size range, and porous structure of the aluminum oxide particles provided in the present application is conducive to optimizing the electrolyte diffusion radius. In addition, the coating formed by the aluminum oxide provided in the present application also has a relatively obvious optimization for the air permeability value of the separator.

Table 3 shows the electrolyte dynamic contact angles of the separator coatings formed by the porous aluminum oxide obtained in Examples 1 and Comparative Examples 1-5.

**Table 3**

| | 10s Static Contact Angle (°) | | | | | | | | | |
|---|---|---|---|---|---|---|---|---|---|---|
| Duration (s) | 2S | 4S | 6S | 8S | 9S | 10S | 20S | 30S | 40S | 50S |
| Example 1 | 28.4 | 24.8 | 22.8 | 20.1 | 19.2 | 18.0 | 17.4 | 16.8 | 16.0 | 15.7 |
| Comparative Example 1 | 33.8 | 29.2 | 27.7 | 25.8 | 25.1 | 24.8 | 24.1 | 23.9 | 22.6 | 21.9 |
| Comparative Example 2 | 31.2 | 27.3 | 25.7 | 25.3 | 24.8 | 24.0 | 22.5 | 21.4 | 20.1 | 19.7 |
| Comparative Example 3 | 43.5 | 39.8 | 37.4 | 35.8 | 35.2 | 35.1 | 28.5 | 25.0 | 23.8 | 22.0 |
| Comparative Example 4 | 34.1 | 30.00 | 29.1 | 28.50 | 27.4 | 27.0 | 25.0 | 23.8 | 23.1 | 21.8 |
| Comparative Example 5 | 35.6 | 31.4 | 29.1 | 27.7 | 26.7 | 26.2 | 25.1 | 23.6 | 23.2 | 22.7 |

In addition, the applicant further tested dynamic electrolyte contact angles and static electrolyte contact angles of the coatings formed by the aluminum oxide provided in Example 1 and Comparative Examples 1-5 and a coating formed by a conventional aluminum oxide. Test results are shown in Table 3. As can be seen from the table, although the static electrolyte contact angle (50 s) of the coatings formed by the porous aluminum oxide obtained in the Examples and Comparative Examples are not significantly different, there is a relatively obvious difference in the change of the dynamic contact angle. The dynamic contact angle of the porous aluminum oxide decreases more rapidly, which can achieve rapid absorption of electrolyte. The porous aluminum oxide provided in the present application not only exhibits a particularly rapid change curve in the dynamic contact angle, but also has a lower static contact angle, which may be one of the reasons for better electrolyte diffusion radius.

In addition, according to the above preparation method for the separator, the porous aluminum oxide obtained in Example 1 and the conventional aluminum oxide were used to prepare separators with coating thicknesses of 2 µm and 3 µm, respectively, based on the coating thickness. The liquid absorption capacity, thickness uniformity of the coating, and surface protrusion were then tested. Test methods and test results were as follows.

### Test

### 1. Liquid absorption capacity

The separators with coating thicknesses of 2 µm and 3 µm formed by applying the porous aluminum oxide obtained in Example 1 (designated as Sample 1 and Sample 2, respectively) and the separators with coating thicknesses of 2 µm and 3 µm formed by applying the porous aluminum oxide obtained in Comparative Example 1 (designated as Comparative Sample 1 and Comparative Sample 2, respectively) were each cut into several rectangles of 20 mm × 50 mm, labeled as AT1, AT2, ... and AL1, AL2, ..., respectively, and weighed to obtain the separator mass M1; and the separators were completely immersed in the electrolyte solution and left for a period of time to ensure complete absorption of the electrolyte solution. Then, the coated separators were air-dried for 12 h-24 h. The air-dried separators were weighed to obtain an immersed separator mass M2. Liquid absorption capacity of a plurality of coated separators was calculated, and the average value was taken as the final liquid absorption capacity of the coated separator: (M2-M1) /(M1 * ρ electrolyte).

### 2. Thickness uniformity

For a 20 cm × 50 cm coated separator sheet, three measurement points were taken at the front, middle, and rear sections respectively, resulting in a total of 6 points. The square root of the sum of squared differences between each data point and the mean point is calculated as δ, where a smaller δ value indicates higher thickness uniformity of the film. The specific formula is as follows: $δ = \sqrt{\left(S1-Smean\right) + … {\left(S6-S mean\right)}^{2}} .$

Test of number of surface protrusions

A 20 cm × 50 cm coated separator sheet was placed under a light source and observed from the back, and the number of black spots was counted.

Test results are shown in Table 4.

**Table 4**

| | Coated Separator Specifications (µm) | Coating Thickness (µm) | Thickness Uniformity/(δ Value) | Number of Surface Protrusions (Numbers/100 cm²) | Liquid absorption capacity (ml/g) |
|---|---|---|---|---|---|
| Sample 1 | 9+2 | 2.215 | 0.195 | 0 | 0.72 |
| Sample 2 | 9+3 | 3.163 | 0.189 | 0 | 0.68 |
| Comparative Sample 1 | 9+2 | 2.218 | 0.235 | 1 | 0.23 |
| Comparative Sample 1 | 9+3 | 3.172 | 0.247 | 2 | 0.27 |

As can be seen from Table 4, the smaller the δ value, the better the thickness uniformity; the fewer the number of the surface protrusions of the separator, the flatter the ceramic separator; and the higher the liquid absorption capacity, the superior the performance. When porous aluminum oxide is used for separator coating compared to conventional alumina, the porous aluminum oxide-based separator coating exhibits excellent thickness uniformity, low surface protrusion rate, and high electrolyte injection volume, among other characteristics.

The above is only specific embodiments of the present application; but the scope of protection of the present application is not limited thereto. Any variations or substitutions that would be readily apparent to those skilled in the art within the technical scope disclosed herein, will fall within the scope of protection of the present application. Therefore, the scope of protection of the present application shall be defined by the scope of the claims.

### INDUSTRIAL APPLICABILITY

The porous aluminum oxide provided by the present application includes very few needle-like, flake, or spherical aluminum oxide particles, and is mainly composed of aluminum oxide particles having tetragonal prism structure. A coating formed based on the aluminum oxide has few surface protrusions and high flatness, and electrolyte wettability of the separator is significantly optimized, resulting in not only a high electrolyte diffusion rate on the separator, but also a larger diffusion radius, a significantly reduced dynamic contact angle, and a higher electrolyte adsorption rate. Applying the porous aluminum oxide powder to the coating of a battery separator can improve the liquid absorption capacity of the battery separator, demonstrating relatively good industrial applicability.

## Claims

1. A porous aluminum oxide powder for lithium-ion battery, **characterized in that** a particle size D50 of the porous aluminum oxide powder is 0.3 µm-2 µm; a specific surface area of the porous aluminum oxide powder is 5 m²/g-50 m²/g; the porous aluminum oxide powder comprises aluminum oxide particles having tetragonal prism structure in an amount of not less than 50%, aluminum oxide particles having spherical structure in an amount of not more than 1%, and aluminum oxide particles having needle-like structure and flake structure in an amount of not more than 5%; and
a ratio of an edge length to a diagonal length of a bottom surface of aluminum oxide particle having tetragonal prism structure is 1:(0.5-5).

2. The porous aluminum oxide powder for lithium-ion battery according to claim 1, **characterized in that** the porous aluminum oxide powder comprises aluminum oxide particles having tetragonal prism structure in an amount of not less than 90%;
and/or, aluminum oxide particles having spherical structure in an amount of not more than 0.5%;
and/or, aluminum oxide particles having needle-like structure and flake structure in an amount of not more than 2%.

3. The porous aluminum oxide powder for lithium-ion battery according to any one of claims 1 to 2, **characterized in that** a content of *α*-aluminum oxide in the porous aluminum oxide powder is not higher than 50%.

4. The porous aluminum oxide powder for lithium-ion battery according to any one of claims 1 to 3, **characterized in that** a surface hydroxyl content of the porous aluminum oxide powder is less than 8 hydroxyl groups/nm²;
and/or, an infrared spectrum of the porous aluminum oxide powder does not exhibit any infrared peaks exceeding its baseline and having a width of less than 50 cm⁻¹ in a wavenumber range of 1,600 cm⁻¹-3,700 cm⁻¹.

5. The porous aluminum oxide powder for lithium-ion battery according to claim 4, **characterized in that** the surface hydroxyl content of the porous aluminum oxide powder is less than 5 hydroxyl groups/ nm²;
and/or, an infrared spectrum of the porous aluminum oxide powder does not exhibit any infrared peaks exceeding the its baseline and having a width of less than 100 cm⁻¹ in a wavenumber range of 1,600 cm⁻¹-3,700 cm⁻¹.

6. The porous aluminum oxide powder for lithium-ion battery according to any one of claims 1 to 5, **characterized in that** the particles of the porous aluminum oxide powder each comprises a plurality of pores, wherein the pores have a pore diameter of 5 nm-50 nm and a pore volume of 0.01 cm³/g-0.4 cm³/g.

7. The porous aluminum oxide powder for lithium-ion battery according to claim 6, **characterized in that** the pores have a pore diameter of 8 nm-20 nm and a pore volume of 0.05 cm³/g-0.2 cm³/g;
and/or, the specific surface area of the porous aluminum oxide powder is 6 m²/g-20 m²/g.

8. The porous aluminum oxide powder for lithium-ion battery according to any one of claims 1 to 7, **characterized in that** the particles of the porous aluminum oxide powder are at least one of θ phase, δ phase, and γ phase, or at least one of η phase, κ phase, χ phase, and ρ phase.

9. The porous aluminum oxide powder for lithium-ion battery according to any one of claims 1 to 8, **characterized in that** the porous aluminum oxide powder is directly prepared without being compounded from a plurality of porous aluminum oxide powders.

10. A preparation method of the porous aluminum oxide powder for lithium-ion battery according to any one of claims 1 to 9, **characterized by** comprising:
mixing aluminum hydroxide, alcohol, inorganic acid and water to obtain a precursor solution;
mixing the precursor solution with an organic acid and water, and raising temperature for reaction to obtain an intermediate; and
subjecting the intermediate to calcination to obtain the porous aluminum oxide powder.

11. The preparation method according to claim 10, **characterized in that** a mass ratio of aluminum hydroxide, alcohol, inorganic acid, and water is 1:1:(0.1-0.3):(1-3);
and/or, the alcohol is at least one selected from the group consisting of ethanol, propanol, n-butanol, isobutanol, pentanol, and isopentanol;
and/or, the inorganic acid is at least one selected from the group consisting of nitric acid, sulfuric acid, and hydrochloric acid.

12. The preparation method according to claim 10 or 11, **characterized in that** a process of the raising temperature for reaction for preparing the intermediate comprises: first reacting at a 60 °C-80 °C for 1 h-3 h; then raising the temperature to 150 °C-200 °C and reacting for 4 h-48 h, controlling a reaction pressure at 1.4 MPa-3.7 MPa;
and/or, a mass ratio of the precursor solution to the organic acid and water is 1:(0.12-0.2):(0.2-0.4), a mass ratio of the inorganic acid to the organic acid is controlled at (0.16-0.5):1; and a mass ratio of the alcohol to the organic acid is (1.2-2.0):1;
and/or, the organic acid is at least one selected from the group consisting of acetic acid, oxalic acid, and citric acid.

13. The preparation method according to any one of claims 10 to 12, **characterized by** first subjecting the intermediate to washing, demagnetizing, and drying, followed by calcination;
and/or, controlling a temperature of the calcination at 600 °C-1,200 °C, and a duration of the calcination of 0.5 h-5 h;
and/or, performing air jet milling after the calcination to obtain the porous aluminum oxide powder.

14. The preparation method according to claim 13, **characterized in that** a barrier agent with a decomposition temperature not exceeding 450 °C is added during preparing the porous aluminum oxide powder from the intermediate.

15. The preparation method according to claim 14, **characterized in that** the barrier agent is added during drying stage or calcination stage;
and/or, a mass ratio of the intermediate powder after the drying to the barrier agent is 100:(0.01-0.1);
and/or, the barrier agent is at least one selected from the group consisting of ammonium bicarbonate, ammonium carbonate, and ammonium nitrate.

16. A battery separator, **characterized in that** the battery separator comprises a base film and a ceramic coating formed on at least one side of the base film, wherein the ceramic coating comprises the porous aluminum oxide powder according to any one of claims 1 to 9; and the base film is a polymer base film.

17. The battery separator according to claim 16, **characterized in that** a liquid absorption capacity of the battery separator is not less than 0.6 mL/g; an electrolyte diffusion radius of the battery separator is not less than 20 mm, wherein the electrolyte has a composition of DEC : EMC : DMC = 1:1:1, with lithium hexafluorophosphate LIPF₆ at 1 mol/L.

18. A battery, **characterized by** comprising the battery separator according to claim 16 or 17.

19. An electrical device, **characterized by** comprising the battery according to claim 18.
